# EUROPEAN PATENT APPLICATION

(11) **EP 2 942 722 A1**
(43) Date of publication of application: **11.11.2015**
(21) Application number: 15158340.8
(22) Date of filing: 10.03.2015
(51) Int. Cl.: G06F 17/50

(54) **THREE-DIMENSIONAL CAD METHOD FOR GENERATING AN ACCURATE SOLID MODEL FROM A LAMINATED COMPOSITE PART DEFINITION**

(30) Priority: 14.03.2014 US 201414210911
(71) Applicant: Siemens Product Lifecycle Management Software Inc., Plano, TX 75024-6612 (US)
(72) Inventor: LeTourneau, Craig, Pelham, NH 03076 (US); Hu, Weifang, Shrewsbury, MA 01545 (US)
(74) Representative: Isarpatent

(57) **Abstract**

Methods for product data management and corresponding systems and computer-readable mediums. A method includes receiving (802) one or more inputs including an input definition (150), one or more ply definitions (154), and one or more ramp definitions (156), the input definition (150) relating to a first surface (302) between or including an outer mold line (OML) (1106) and an inner mold line (IML) (1104) of a laminated composite part (1102). The method includes creating (804) an output definition (152) from the inputs. The method includes creating (806) a final solid (702) from the output definition (152) and the inputs, the output definition (152) relating to first surface (302) between or including the OML (1106) and the IML (1104) of a laminated composite part (1102). The method includes transmitting (808) the final solid (702).

## Description

### TECHNICAL FIELD

The present disclosure is directed, in general, to computer-aided design ("CAD"), visualization, and computer-aided manufacturing ("CAM") systems, product lifecycle management ("PLM") systems, and similar systems, that manage data for products and other items (collectively, "Product Data Management" systems or PDM systems).

### BACKGROUND OF THE DISCLOSURE

CAD and CAM systems aid in designing and manufacturing products. Improved systems are desirable.

### SUMMARY OF THE DISCLOSURE

Various disclosed embodiments include CAD and simulation methods and corresponding systems and computer-readable mediums. A method includes receiving one or more inputs including an input definition, one or more ply definitions, and one or more ramp definitions, the input definition relating to first surface between or including an outer mold line (OML) and an inner mold line (IML) of a laminated composite part. The method includes creating an output definition from the inputs, the output definition relating to first surface between or including an outer mold line (OML) and an inner mold line (IML) of a laminated composite part. The method includes creating a final solid from the output definition and the inputs. The method includes transmitting the final solid.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the detailed description below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented;
Figure 2 illustrates an output surface in accordance with disclosed embodiments;
Figure 3 illustrates an input surface in accordance with disclosed embodiments;
Figure 4 illustrates a solid formed by thickening the input surface, which can be trimmed by the output surface in accordance with disclosed embodiments;
Figure 5 illustrates a trimmed output surface edge and a trimmed input surface edge in accordance with disclosed embodiments;
Figure 6 illustrates edge surfaces between the output surface and the input surface in accordance with disclosed embodiments;
Figure 7 illustrates a final solid in accordance with disclosed embodiments;
Figure 8 illustrates a flowchart of a process in accordance with disclosed embodiments;
Figure 9 illustrates a flowchart of a process in accordance with disclosed embodiments;
Figure 10 illustrates a flowchart of a process in accordance with disclosed embodiments; and
Figure 11 illustrates a laminated composite part in accordance with disclosed embodiments.

### DETAILED DESCRIPTION

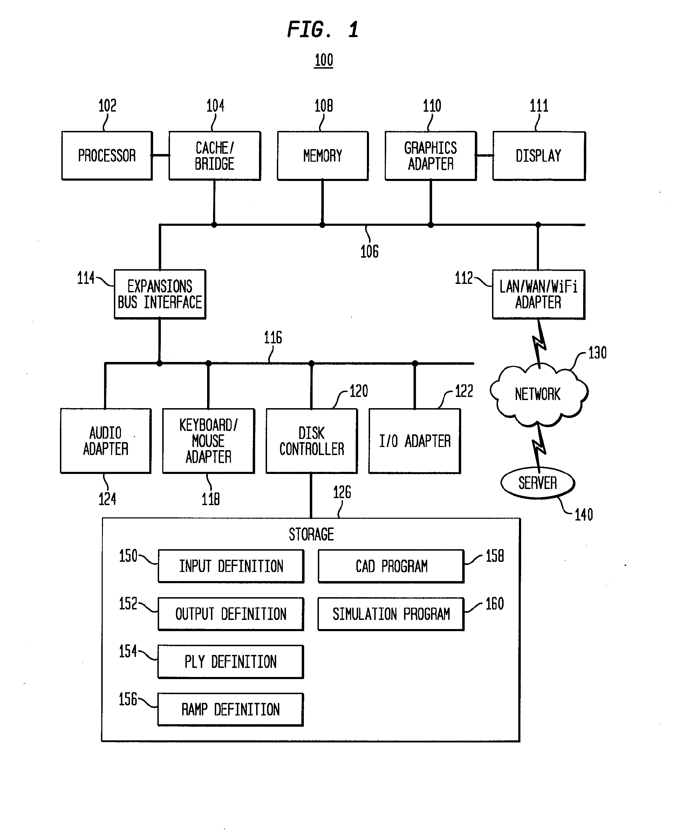

Figures 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Laminated composite parts include plies of composite material laid down on a tool or outer mold line (OML). Typically, the composite material includes reinforcement fibers in a polymer matrix. The number and orientation of the plies in different areas of the part can be determined by the structural loads imposed on the plies. Each such area is called a constant thickness area that has a thickness equal to the sum of the thicknesses of the plies covering the area on the OML.

Plies can be dropped-off one at a time from a constant thickness area to an area of lesser thickness. This can be done to minimize stress concentrations that may induce delamination of the composite part. Such staggering of the ply boundaries forms ramps dropping-off at a given rate.

Given a specification or definition for the number of plies in each area of the part and the drop-off rates for each ramp, it is possible to generate offset surfaces for each constant thickness area and each ramp surface. These offset surfaces can be joined together to form the top surface of the composite part or inner mold line (IML). Additionally, intermediate surfaces can be used that are between the OML and the IML. For example, in a core panel type design the user may start with the OML and create an overcore solid, then start from the overcore surface and create a final IML solid.

Figure 1 illustrates a block diagram of a data processing system in which an embodiment can be implemented, for example as a CAD system particularly configured by software or otherwise to perform the processes as described herein, and in particular as each one of a plurality of interconnected and communicating systems as described herein. The data processing system depicted includes a processor 102 connected to a level two cache/bridge 104, which can be connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (e.g., WiFi) adapter 112, may also be connected to local system bus 106. Expansion bus interface 114 connects local system bus 106 to input/output (I/O) bus 116. I/O bus 116 can be connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices. The storage 126 includes space to store one or more of the input definition 150, the output definition 152, the ply definition 154, the ramp definition 156, the CAD program 158, the simulation program 160, and so on.

The data processing system 100 and PDM system include a simulation program 160 that simulates the surfaces of the laminated composite part. The data processing system and PDM system also include a CAD program 158 that allows for modeling of the simulated surfaces.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system can be modified or created in accordance with the present disclosure as described.

LAN/WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

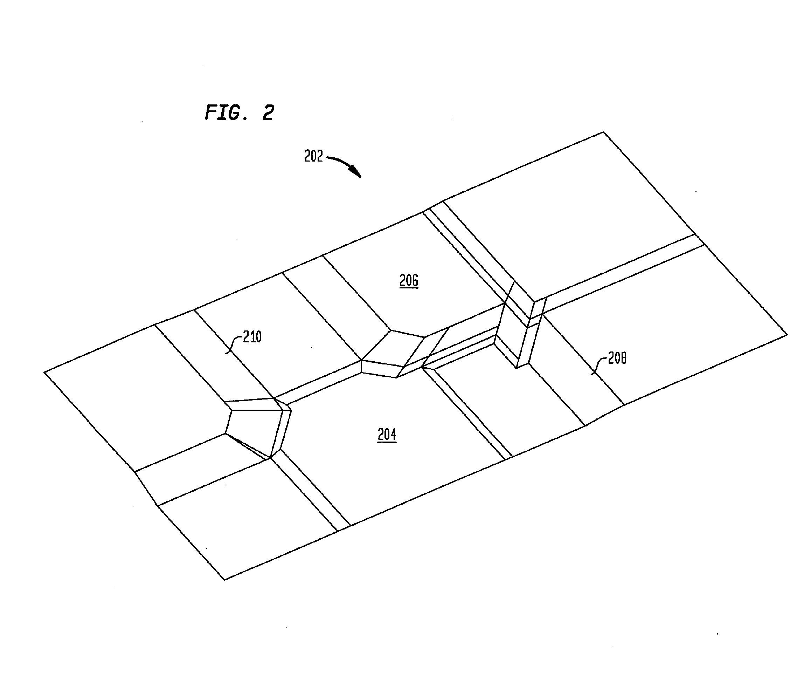

Figure 2 illustrates an output surface in accordance with disclosed embodiments. The output surface 202 can be a surface usable by a CAD program. The output surface 202 can approximate the IML of the laminated composite part or a surface between the OML and IML of a laminated composite part, such as an overcore surface. The output surface 202 includes one or more faces 204-210 that relate to one or more constant thickness areas (faces 204-206) and one or more ramps (faces 208-210). The output surface 202 can be created via a simulation program that uses, as inputs, one or more input definitions, drop-off rates for ramps, and definitions of plies. The input definition can be an OML definition or an overcore definition that can be between the OML definition and an IML definition. The simulation program outputs an output definition. The output definition simulates and approximates the IML or an overcore surface between the OML and IML of the laminated composite part. The output definition can be exported from the simulation program and/or imported into a computer aided design (CAD) program to form a surface usable by the CAD program, also referred to as a CAD surface, which can be the output surface 202. The one or more definitions of the plies specify one or more of size, thickness, location, type, and so on of each ply and the definitions allow the simulation program to create the output definition.

The one or more constant thickness areas 204-206 are areas of constant thickness between the output surface and the input surface of the part being simulated, modeled, and/or designed. The constant thickness areas 204-206 of the output surface 202 represent portions of the output surface of the laminated composite part that can be substantially parallel to the input surface of the laminated composite part. The one or more ramps 208-210 are areas of variable thickness between the output surface and the input surface of the laminated composite part. Each constant thickness area can be adjacent to one or more ramps. Each ramp can be adjacent to one or more constant thickness areas and ramps.

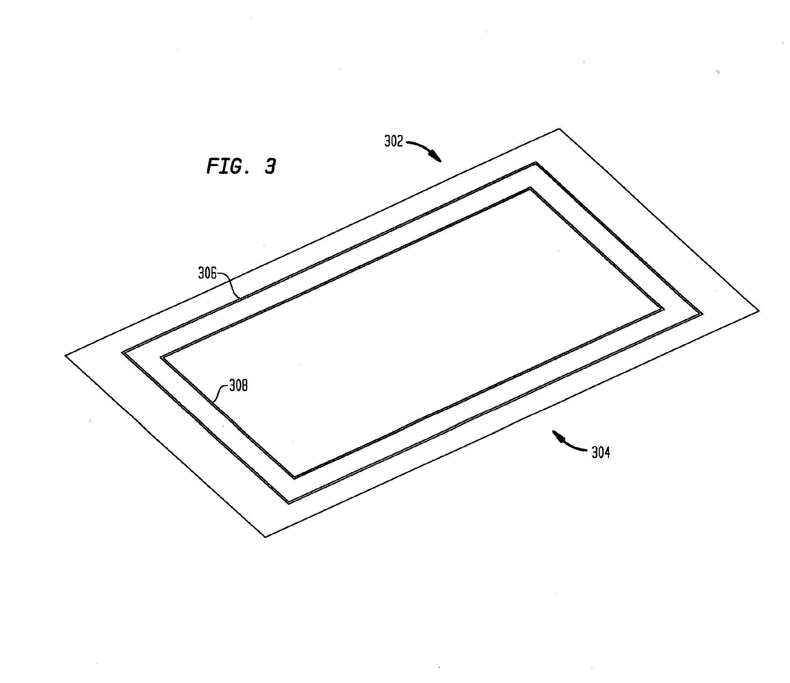

Figure 3 illustrates an input surface in accordance with disclosed embodiments. The input surface 302 can be a surface of a CAD program. The input surface 302 approximates the OML or an overcore surface between the OML and the IML of the laminated composite part. The input surface 302 includes the tooling boundary 304, the manufacturing boundary 306, and the engineering boundary 308. The tooling boundary 304 can be outside of the manufacturing boundary 306 and the area between the tooling boundary 304 and the manufacturing boundary 306 can be the area utilized by tools to handle and manipulate the laminated composite part while the laminated composite part is being manufactured. The manufacturing boundary 306 can be outside of the engineering boundary 308 and the area between the manufacturing boundary 306 and the engineering boundary 308 allows for processing of the final part beyond the engineering boundary 308 to create uniformity at the edges of the laminated composite part at the engineering boundary 308. The engineering boundary 308 can be the final boundary of the part after manufacturing of the part has been finished. As an example of an OML, when the part being created is a panel for the skin of an aircraft, the OML can be the outer surface of the skin of the panel.

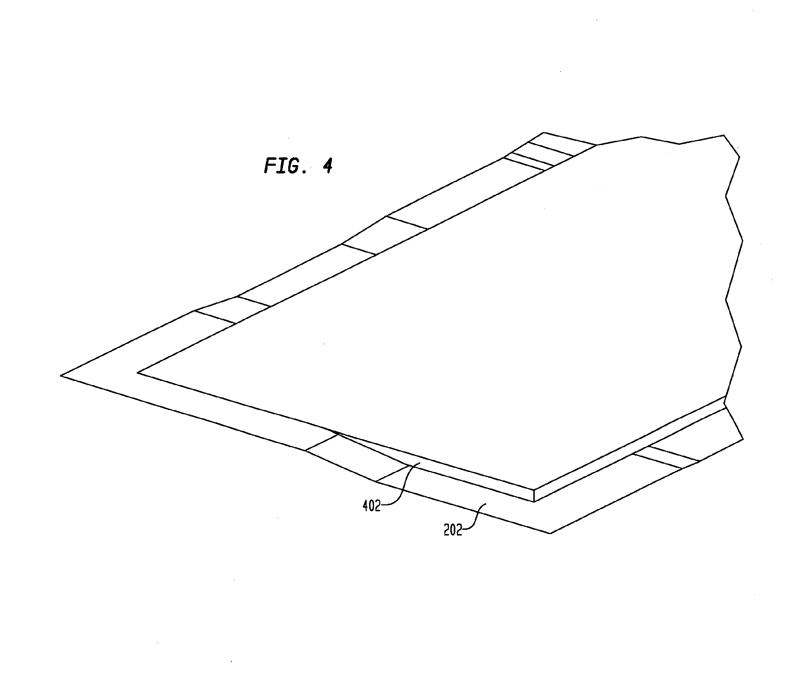

Figure 4 illustrates a solid formed by thickening the input surface, which can be trimmed by the output surface in accordance with disclosed embodiments. The final solid representing a laminated composite part can be created in a number of different ways, including, as shown by Figure 4, by thickening the input surface 302. The thickened solid 402 can be created via the CAD program by thickening the input surface, such as the input surface 302 of Figure 3, through the output surface 202. The thickness of the thickened solid can be longer, or thicker, than the thickest constant thickness area between the input surface 302 and the output surface 202 so that the entire volume between the input surface 302 and the output surface 202 can be filled via the thickened solid. After creating the thickened solid by thickening the input surface 302, the thickened solid 402 can be trimmed with the output surface 202 so that the portion of the thickened solid that goes beyond, or in this example is above, the output surface 202 can be removed from the thickened solid to form the final solid.

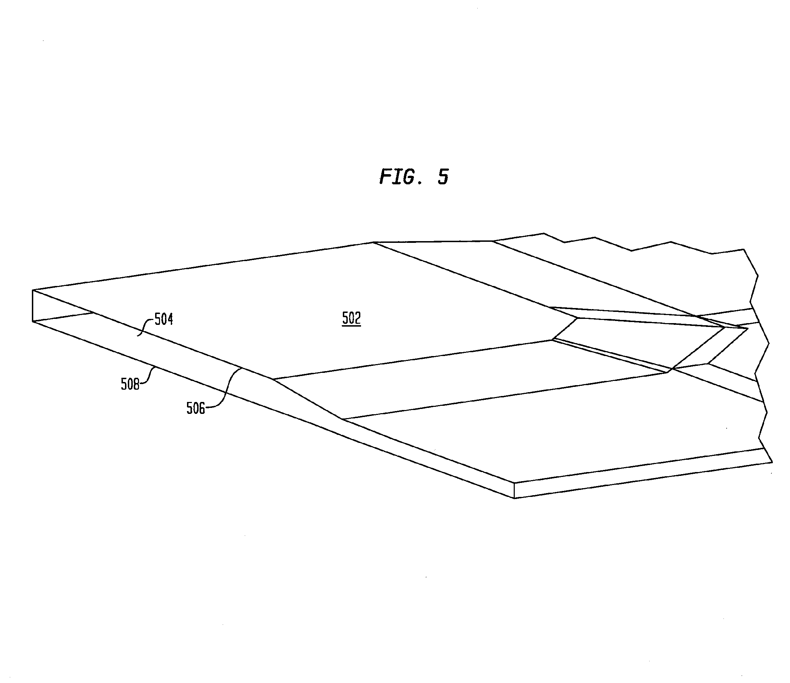

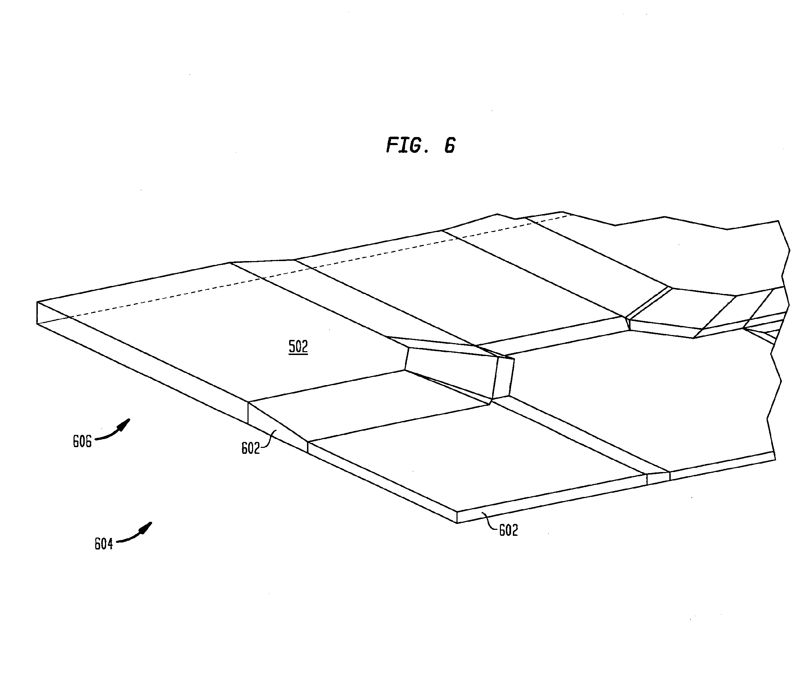

Figure 5 illustrates the trimmed output surface edge and the trimmed input surface edge in accordance with disclosed embodiments. The final solid of a part can be created in a number of different ways, including, as shown by Figures 5 and 6, by filling in the volume between the output surface 202 and the input surface 302. The output surface 202 and the input surface 302 can be appropriately positioned with respect to each other via the CAD program such that there can be a space or volume between the output surface 202 and the input surface 302. The output surface 202 and the input surface 302 can optionally be trimmed to a boundary, such as the engineering boundary 308 of Figure 3, to form the trimmed output surface 502 and the trimmed input surface 504. The trimmed output surface edge 506 of the trimmed output surface 502 can be aligned with the trimmed input surface edge 508 of the trimmed input surface 504.

Figure 6 illustrates the edge surfaces between the output surface and the input surface in accordance with disclosed embodiments. The edge surfaces 602 can be created between the trimmed output surface 502 and the trimmed input surface 504 (see Figure 5) via an application program interface (API) of the CAD program. The edge surfaces 602, the trimmed output surface 502 and the trimmed input surface 504 can be joined to create the joined three dimensional surface 604. The volume 606 of the joined surface 604 can be created by the CAD program and the final solid can be created from the volume 606.

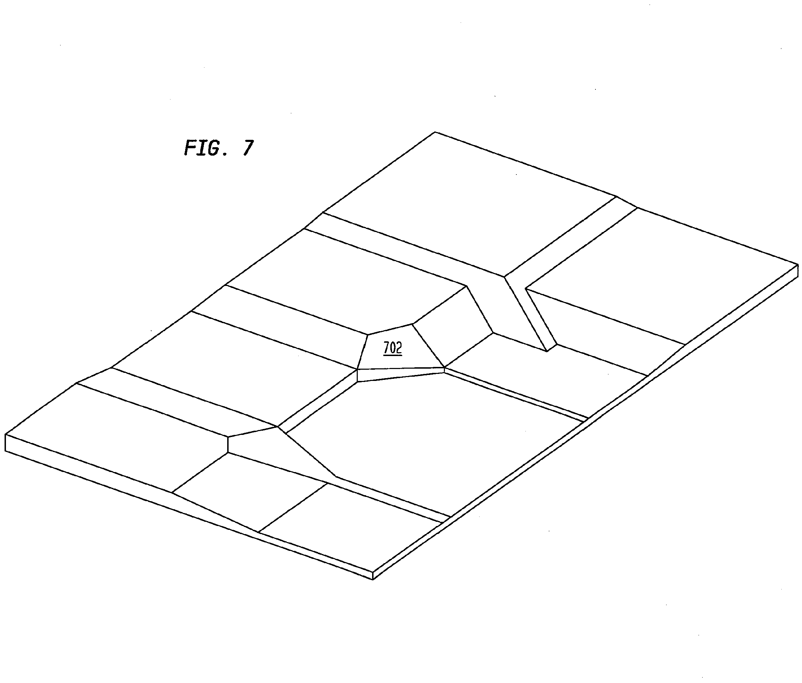

Figure 7 illustrates the final solid in accordance with disclosed embodiments. The final solid 702 can be a CAD representation of the laminated composite part that can be used with the CAD program to design complex mechanical assemblies utilizing the final solid 702. The final solid 702 can be created via thickening an input surface, such as the input surface 302 of Figure 3, and trimming the thickened surface with an output surface, such as the output surface 202 of Figure 2. Additionally, the final solid 702 can be created via determining the volume between an output surface, such as the trimmed output surface 502 of Figure 5, and an input surface, such as the trimmed input surface 504 of Figure 5.

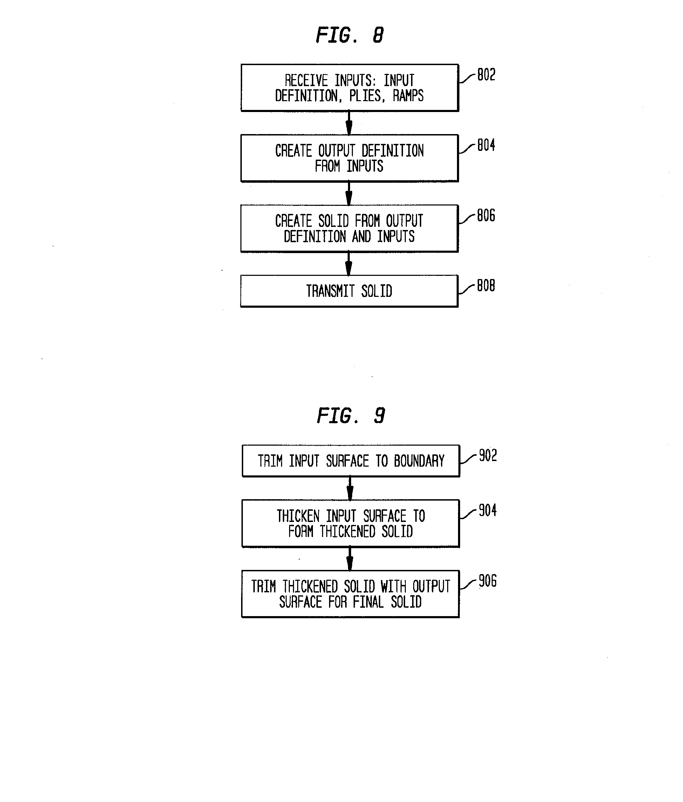

Figure 8 illustrates a flowchart of a process in accordance with disclosed embodiments that may be performed, for example, by a CAD system as disclosed herein.

The system, such as the data processing system of Figure 1, receives as inputs one or more input definitions, drop-off rates for ramps, and definitions of plies via a simulation program (step 802). The input definition defines an outer surface of the laminated composite part to be modeled or simulated. The input definition can be embodied as an input definition file for use with the simulation program or as an input surface for use with the CAD program. The drop-off rates for ramps indicate the slope of one or more ramps created by the layers of plies to be used to make the laminated composite part. The one or more definitions of the plies specify one or more of size, thickness, location, type, and so on of each ply that allow the simulation program to simulate the IML or other surface of the laminated composite part and create the output definition. The inputs can be received, loaded, and processed by the simulation program running on the system. One or more of the processor 102, the memory 108, and the simulation program running on the processor 102 receive the inputs via one or more of the local system bus 106, the adapter 112, the network 130, the server 140, the interface 114, the I/O bus 116, the disk controller 120, the storage 126, and so on. Receiving, as used herein, can include retrieving from storage, receiving from another device or process, receiving via an interaction with a user, or otherwise.

The system creates an output definition from the inputs (step 804). The output definition can be calculated from and based on one or more of the input definition, the thickness and locations of one or more plies, and the drop-off rates of the ramps between constant thickness areas of the plies. The output definition can be a simulated surface of what the IML or other surface of the laminated composite part will be when fabricated and manufactured. The output definition provided by the simulation program can be converted into an output surface that can be used by the CAD program.

The system creates a final solid from the output surface and the input surface (step 806). The application program interface (API) of the CAD program can be used to create the final solid. In certain embodiments, the final solid can be created by thickening the input surface with a thickness greater than the thickest constant thickness area and then trimming the thickened solid with the output surface. In certain embodiments, the final solid can be created by determining the volume between the input surface and the output surface and converting the volume into the final solid.

The system transmits the final solid (step 808). One or more of the processor 102, the memory 108, and the CAD program running on the processor 102 transmit the final solid via one or more of the local system bus 106, the adapter 112, the network 130, the server 140, the interface 114, the I/O bus 116, the disk controller 120, the storage 126, and so on. In certain embodiments, the CAD program running on the processor 102 transmits the final solid to the display 111 via the local system bus 106 and graphics adapter 110. In certain embodiments, the CAD program running on the processor 102 transmits the final solid to be stored in the memory 108 or the storage 126 via the local system bus 106 and I/O bus 116.

Figure 9 illustrates a flowchart of a process in accordance with disclosed embodiments that may be performed, for example, by a CAD system as disclosed herein.

The system trims the input surface to the boundary (step 902) to form a trimmed input surface. The CAD program API includes a trim command that removes (or trims) a first surface based on one or more boundaries. The system calls the trim command with inputs of the input surface and one or more boundaries that correspond to one or more of the tooling, manufacturing, or engineering boundaries. The system trims the input surface that corresponds to the input definition according to one of a tooling boundary, a manufacturing boundary, and an engineering boundary. The input surface can be for use with the CAD program and the input definition can be for use with the simulation program. The input surface can be trimmed to form the trimmed input surface. The input surface and the trimmed input surface can be CAD surfaces for use with the CAD program. The input surface represents, via the CAD program, an OML of the laminated composite part and the input surface corresponds to an input definition for use with the simulation program. The boundary can be selected from one or more of a tooling, manufacturing, or engineering boundary for the OML of the laminated composite part, such as the tooling boundary 304, the manufacturing boundary 306, and the engineering boundary 308 of Figure 3. The input surface can be larger than the selected boundaries and can be trimmed to form the trimmed input surface, which does not extend past the selected boundaries.

The system creates thickened solid from the trimmed input surface (step 904). The CAD program API includes a thicken command that creates a thickened solid from inputs of a surface and a length with the length being the thickness or length of the thickened solid. The system thickens the input surface to form the thickened solid. The system calls the thicken command of the API of the CAD program to form the thickened solid using inputs of the input surface and a length equal to the thickness of the thickest constant thickness area of the laminated composite part. The thickened solid can be formed substantially normal or perpendicular to the primary or base plane of the input surface with a length of the given constant thickness area. In certain embodiments, one or more angles or vectors can be given as additional inputs to form the thickened solid with respect to the one or more angles or vectors that is not substantially normal or perpendicular to the primary or base plane of the input surface.

The system trims the thickened solid with the output surface (step 906). The CAD program API includes a trim command that trims a solid based on a surface. The system calls the trim command of the API of the CAD program with inputs of the thickened solid and the output surface. The system trims the thickened solid with the output surface created from the output definition to form the final solid. The CAD program forms the final solid using the thickened solid and the output surface as inputs, trimming away one or more portions of the thickened solid that extend beyond the output surface.

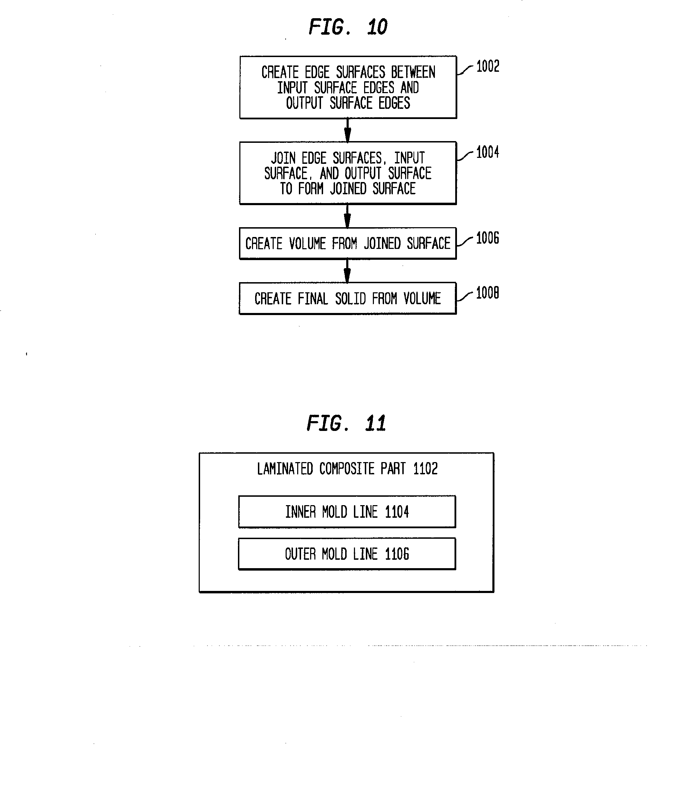

Figure 10 illustrates a flowchart of a process in accordance with disclosed embodiments that may be performed, for example, by a CAD system.

The system creates one or more edge surfaces between the edges of the input surface and the edges of the output surface (step 1002). Put another way, the system creates one or more edge surfaces between an input surface corresponding to the input definition and an output surface corresponding to the output definition. The input surface and the output surface can be aligned and optionally trimmed to the same boundary, such as one of the tooling boundary 304, the manufacturing boundary 306, and the engineering boundary 308 of Figure 3. Edge surfaces can then be created between the input surface and the output surface at a selected boundary line or the edge surfaces can be created at the outermost edges of the trimmed input surface and the trimmed output surface.

The system joins the one or more edge surfaces, the input surface, and the output surface (step 1004) to form a joined surface. The edge surfaces can be joined with one or more of the input surface, the output surface, the trimmed input surface, and the trimmed output surface. The joined surface can be a three dimensional construct that includes all the faces of the two-dimensional surfaces that can be joined together.

The system creates a volume from the joined surface (step 1006). The joined surface can be a closed surface with no holes or gaps. The joined surface defines and encloses a volume. The CAD program calculates the three-dimensional volume enclosed by the joined surface.

The system creates a final solid from the volume (step 1008). The three-dimensional volume of the joined surface can be converted to the final solid that has the same shape and volume as the volume created from the joined surface. The final solid represents, in the CAD program, the laminated composite part that corresponds to the input surface and the output surface.

Figure 11 illustrates a laminated composite part in accordance with disclosed embodiments. The laminated composite part 1102 includes the IML 1104 and the OML 1106, which are each as described above. The laminated composite part 1102 can be used in a larger component, system, or assembly, such as an aircraft. The laminated composite part 1102 can be simulated by the simulation program 160 and modeled by the CAD program 158.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke paragraph six of 35 USC § 112 unless the exact words "means for" are followed by a participle.

### Further Embodiments

1. A method for product data management, the method performed by a data processing system (100) and comprising:
   receiving (802) one or more inputs including an input definition (150), one or more ply definitions (154), and one or more ramp definitions (156), the input definition (150) relating to a first surface (302) between or including an outer mold line (OML) (1106) and an inner mold line (IML) (1104) of a laminated composite part (1102);
   creating (804) an output definition (152) from the inputs, the output definition (152) relating to a second surface (202) between or including the OML (1106) and the IML (1104) of laminated composite part (1102);
   creating (806) a final solid (702) from the output definition (152) and the inputs; and
   transmitting (808) the final solid (702).
2. The method of embodiment 1, further comprising:
   trimming (902) the first surface (302) that corresponds to the input definition (150) according to one of a tooling boundary (304), a manufacturing boundary (306), and an engineering boundary (308),
   wherein the first surface (302) is for use with a computer aided design (CAD) program (158) and the input definition (150) is for use with a simulation program (160).
3. The method of embodiment 2, further comprising:
   thickening (904) the first surface (302) to form a thickened solid (402).
4. The method of embodiment 3, further comprising:
   trimming (906) the thickened solid with the second surface (202) created from the output definition (152) to form the final solid (702).
5. The method of embodiment 1, further comprising:
   creating (1002) one or more edge surfaces (602) between the first surface (302) corresponding to the input definition (150) and the second surface (202) corresponding to the output definition.
6. The method of embodiment 5, further comprising:
   joining (1004) the edge surfaces (602), the first surface (302), and the second surface (202) to form a joined surface (604).
7. The method of embodiment 6, further comprising:
   creating (1006) a volume (606) from the joined surface (604); and
   creating (1008) the final solid (702) from the volume (606).
8. A data processing system (100) comprising:
   a processor (102); and
   an accessible memory (108), the data processing system (102) particularly configured to:
      receive (802) one or more inputs including an input definition (150), one or more ply definitions (154), and one or more ramp definitions (156), the input definition (150) relating to a first surface (302) between or including an outer mold line (OML) (1106) and an inner mold line (IML) (1104) of a laminated composite part (1102);
      create (804) an output definition (152) from the inputs, the output definition (152) relating to a second surface (202) between or including the OML (1106) and the IML (1104) of the laminated composite part (1102);
      create (806) a final solid (702) from the output definition (152) and the inputs; and
      transmit (808) the final solid (702).
9. The data processing system (100) of embodiment 8, further configured to:
   trim (902) the first surface (302) that corresponds to the input definition (150) according to one of a tooling boundary (304), a manufacturing boundary (306), and an engineering boundary (308),
   wherein the first surface (302) is for use with a computer aided design (CAD) program (158) and the input definition (150) is for use with a simulation program (160).
10. The data processing system (100) of embodiment 9, further configured to:
   thicken (904) the first surface (302) to form a thickened solid (402).
11. The data processing system (100) of embodiment 10, further configured to:
   trim (906) the thickened solid (402) with the second surface (202) created from the output definition (152) to form the final solid (702).
12. The data processing system (100) of embodiment 8, further configured to:
   create (1002) one or more edge surfaces (602) between the first surface (302) corresponding to the input definition (150) and the second surface (202) corresponding to the output definition (152).
13. The data processing system (100) of embodiment 12, further configured to:
   join the edge surfaces (602), the first surface (302), and the second surface (202) to form a joined surface (604).
14. The data processing system of embodiment 13, further configured to:
   create (1006) a volume (606) from the joined surface (604); and
   create (1008) the final solid (702) from the volume (606).
15. A non-transitory computer-readable medium (126) encoded with executable instructions that, when executed, cause one or more data processing systems (100) to:
   receive (802) one or more inputs including an input definition (150), one or more ply definitions (154), and one or more ramp definitions (156), the input definition (150) relating to a first surface (302) between or including an outer mold line (OML) (1106) and an inner mold line (IML) (1104) of a laminated composite part (1102);
   create (804) an output definition (152) from the inputs, the output definition (152) relating to a second surface (202) between or including the OML (1106) and the IML (1104) of the laminated composite part (1102); create (806) a final solid (702) from the output definition (152) and the inputs; and
   transmit (808) the final solid (702).
16. The computer-readable medium (126) of claim 15, the executable instructions further cause the one or more data processing systems (100) to:
   trim (902) the first surface (302) that corresponds to the input definition (150) according to one of a tooling boundary (304), a manufacturing boundary (306), and an engineering boundary (308),
   wherein the first surface (302) is for use with a computer aided design (CAD) program (158) and the input definition (150) is for use with a simulation program (160).
17. The computer-readable medium (126) of embodiment 16, the executable instructions further cause the one or more data processing systems (100) to: thicken (904) the first surface (302) to form a thickened solid (402).
18. The computer-readable medium of embodiment 17, the executable instructions further cause the one or more data processing systems (100) to:
   trim (906) the thickened solid (402) with the second surface (202) created from the output definition (152) to form the final solid (702).
19. The computer-readable medium of embodiment 15, the executable instructions further cause the one or more data processing systems (100) to:
   create (1002) one or more edge surfaces (602) between the first surface (302) corresponding to the input definition (150) and the second surface (202 corresponding to the output definition (152).
20. The computer-readable medium (126) of embodiment 19, the executable instructions further cause the one or more data processing systems (100) to:
   join (1004) the edge surfaces (602), the first surface (302), and the output surface (202) to form a joined surface (604);
   create (1006) a volume (606) from the joined surface (604); and
   create (1008) the final solid (702) from the volume (606).

## Claims

1. A method for product data management, the method performed by a data processing system (100) and comprising:
receiving (802) one or more inputs including an input definition (150), one or more ply definitions (154), and one or more ramp definitions (156), the input definition (150) relating to a first surface (302) between or including an outer mold line (OML) (1106) and an inner mold line (IML) (1104) of a laminated composite part (1102);
creating (804) an output definition (152) from the inputs, the output definition (152) relating to a second surface (202) between or including the OML (1106) and the IML (1104) of laminated composite part (1102);
creating (806) a final solid (702) from the output definition (152) and the inputs; and
transmitting (808) the final solid (702).

2. The method of claim 1, further comprising:
trimming (902) the first surface (302) that corresponds to the input definition (150) according to one of a tooling boundary (304), a manufacturing boundary (306), and an engineering boundary (308),
wherein the first surface (302) is for use with a computer aided design (CAD) program (158) and the input definition (150) is for use with a simulation program (160).

3. The method of claim 2, further comprising:
thickening (904) the first surface (302) to form a thickened solid (402).

4. The method of claim 3, further comprising:
trimming (906) the thickened solid with the second surface (202) created from the output definition (152) to form the final solid (702).

5. The method of claim 1, further comprising:
creating (1002) one or more edge surfaces (602) between the first surface (302) corresponding to the input definition (150) and the second surface (202) corresponding to the output definition.

6. The method of claim 5, further comprising:
joining (1004) the edge surfaces (602), the first surface (302), and the second surface (202) to form a joined surface (604).

7. The method of claim 6, further comprising:
creating (1006) a volume (606) from the joined surface (604); and
creating (1008) the final solid (702) from the volume (606).

8. A data processing system (100) comprising:
a processor (102); and
an accessible memory (108), the data processing system (102) particularly configured to:
receive (802) one or more inputs including an input definition (150), one or more ply definitions (154), and one or more ramp definitions (156), the input definition (150) relating to a first surface (302) between or including an outer mold line (OML) (1106) and an inner mold line (IML) (1104) of a laminated composite part (1102);
create (804) an output definition (152) from the inputs, the output definition (152) relating to a second surface (202) between or including the OML (1106) and the IML (1104) of the laminated composite part (1102);
create (806) a final solid (702) from the output definition (152) and the inputs; and
transmit (808) the final solid (702).

9. The data processing system (100) of claim 8, further configured to:
trim (902) the first surface (302) that corresponds to the input definition (150) according to one of a tooling boundary (304), a manufacturing boundary (306), and an engineering boundary (308),
wherein the first surface (302) is for use with a computer aided design (CAD) program (158) and the input definition (150) is for use with a simulation program (160).

10. The data processing system (100) of claim 9, further configured to:
thicken (904) the first surface (302) to form a thickened solid (402).

11. The data processing system (100) of claim 10, further configured to:
trim (906) the thickened solid (402) with the second surface (202) created from the output definition (152) to form the final solid (702).

12. The data processing system (100) of claim 8, further configured to:
create (1002) one or more edge surfaces (602) between the first surface (302) corresponding to the input definition (150) and the second surface (202) corresponding to the output definition (152).

13. The data processing system (100) of claim 12, further configured to:
join the edge surfaces (602), the first surface (302), and the second surface (202) to form a joined surface (604).

14. The data processing system of claim 13, further configured to:
create (1006) a volume (606) from the joined surface (604); and
create (1008) the final solid (702) from the volume (606).

15. A non-transitory computer-readable medium (126) encoded with executable instructions that, when executed, cause one or more data processing systems (100) to perform a method according to any of the claims 1 to 7.
